# EUROPEAN PATENT SPECIFICATION

(11) **EP 2 335 811 B1**
(45) Date of publication and mention of the grant of the patent: **24.06.2015**
(21) Application number: 09819274.3
(22) Date of filing: 09.10.2009
(51) Int. Cl.: B01D 53/94, B01D 39/20, B01J 23/66, B01J 35/04, F01N 3/02, F01N 3/10, B01D 46/24, B01J 37/02, B01J 35/00, B01J 23/96, B01J 23/00, B01J 29/72, F01N 3/035, B01J 23/58, B01J 29/70, F01N 3/08, B01J 29/072, B01J 29/068, F01N 3/023, B01J 23/63

(54) **EXHAUST GAS PURIFYING DEVICE**
ABGASREINIGUNGSVORRICHTUNG
DISPOSITIF DE PURIFICATION DE GAZ D ÉCHAPPEMENT

(30) Priority: 09.10.2008 JP 2008263272; 14.10.2008 JP 2008265020
(43) Date of publication of application: 22.06.2011
(73) Proprietor: Honda Motor Co., Ltd., Minato-ku Tokyo 107-8556 (JP)
(72) Inventor: MORI, Takeshi, Wako-shi Saitama 351-0193 (JP); MATSUMOTO, Takeshi, Wako-shi Saitama 351-0193 (JP); SUGIYAMA, Tomomi, Wako-shi Saitama 351-0193 (JP); HATAKEYAMA, Yoshiaki, Wako-shi Saitama 351-0193 (JP); MAMIYA, Hiroyuki, Wako-shi Saitama 351-0193 (JP); TAKEUCHI, Hiroto, Wako-shi Saitama 351-0193 (JP)
(74) Representative: Weickmann & Weickmann
(86) International application number: PCT/JP2009/067646
(87) International publication number: WO 2010/041741

(56) References cited:
- EP-A1- 1 932 590
- EP-A2- 1 716 913
- WO-A1-2006/068022
- DE-A1- 10 242 303
- JP-A- 8 117 600
- JP-A- 2003 170 051
- JP-A- 2007 296 518
- JP-A- 2008 030 003
- JP-A- 2008 223 708
- US-A1- 2006 053 774

## Description

### TECHNICAL FIELD

The present invention relates to an exhaust gas purifying device, and more specifically relates to an exhaust gas purifying device that can efficiently purify HC, CO and particulate matter contained in the exhaust gas discharged from an internal combustion engine at low temperatures. In addition, it relates to an exhaust gas purifying device that can efficiently purify NOx in addition to HC, CO and particulate matter at low temperatures.

### BACKGROUND ART

Generally, internal combustion engines, particularly diesel engines, discharge particulate matter (hereinafter referred to as PM) in abundance while running. As a result, in order to prevent PM from being discharged into the atmosphere, a diesel particulate removing device (diesel particular filter, hereinafter referred to as DPF) has typically been equipped in the exhaust system of diesel engines.

The DPF collects PM when exhaust gas passes through the fine holes in the filter walls. The PM collected in the DPF accumulates inside the filter, and causes the DPF performance to degrade by causing an increase in pressure drop when the accumulated amount increases. As a result, a DPF regeneration process is required periodically.

As the DPF regeneration process method, a method of combustively removing PM accumulated inside the DPF by controlling the DPF internal temperature to a high temperature can be exemplified. More specifically, a process is performed in which the temperature inside the DPF is made a high temperature by raising the exhaust gas temperature with post injection or the like, and the PM accumulated in the DPF is combustively removed.

In addition, a catalyzed soot filter (hereinafter referred to as CSF) that has been imparted with HC purifying capacity and CO purifying capacity by loading a noble metal-based catalyst on the DPF has been used conventionally. According to this CSF, when carrying out the regeneration process on PM by post injection or the like, NO in the exhaust gas can be converted to NO₂ by action of the noble metal-based catalyst, and the combustion of PM can be assisted by the NO₂ thus produced. However, the CSF cannot actively combust PM. In addition, according to the advancement in ENG technology in recent years, the current situation is that the necessity to impart catalytic functions to the DPF is fading.

For example, an invention that regenerates a DPF by performing post injection in an exhaust purifying device equipped with an oxidation catalyst (Diesel Oxidation Catalyst, hereinafter referred to as DOC) and DPF is disclosed in Patent Document 1. According to this invention, it is regarded that there is no degradation in engine performance due to excess collection of PM in the DPF, and also that damage to the filter does not occur from an excessive temperature rise during regeneration.

In addition, an invention that performs a regeneration process on the CSF of an exhaust purifying device equipped with a DOC and CSF, by adding fuel into the exhaust gas flowing on a upstream side of the DOC and CSF, based on a vehicle speed signal of a vehicle speed sensor, is disclosed in Patent Document 2. According to this invention, it is regarded that the added amount of fuel required in the regeneration of the CSF can be drastically reduced, and thus the fuel economy can be improved considerably.

Moreover, an invention related to a regeneration technique that causes collected PM to combust in an exhaust purifying device equipped with a DOC and CSF, by performing operations such as retarding the timing of fuel injection timing into the cylinders, expansion stroke injection, intake throttling, and exhaust throttling to raise the exhaust gas temperature is disclosed in Patent Document 3. According to this invention, it is regarded that, even in a case of the operation state of the internal combustion engine changing and entering an operating region unfit for the regeneration operation while executing a CSF regeneration operation, it is possible to perform regeneration on the CSF while suppressing an increase in the fuel consumption of the internal combustion engine by configuring so as to continue the regeneration operation while the CSF temperature is high.

However, diesel engines in particular discharge nitrogen oxides (hereinafter referred to as NOx) in abundance while running. Since oxygen is present in large amounts in the exhaust gas for the case of diesel engines, NOx and PM in the exhaust gas cannot be simultaneously purified, even if using a three-way catalyst such as that used in the purification of exhaust gas discharged from gasoline engines.

In addition, in order to prevent NOx from being discharged into the atmosphere, investigations into various NOx purifying bodies have been advancing. More specifically, in addition to into NOx purifying catalysts that can purify NOx in exhaust gas in which the air-fuel ratio has been controlled to lean or rich, investigations have been made into NOx selective reduction catalysts that purify NOx using urea and the like as a NOx reducing agent.

On the other hand, experiments have been made in recent years to decrease both PM and NOx contained in the exhaust gas using the above-mentioned DPF and NOx purifying body in combination.

For example, an exhaust gas purifying device equipped with a DOC and DPF has been disclosed (refer to Patent Document 4). According to this exhaust gas purifying device, it is regarded that PM can be combustively removed at low temperatures by causing NO in the exhaust gas to change to NO₂, and causing the PM accumulated in the DPF to react with the NO₂.

In addition, an exhaust gas purifying device equipped with a NOx absorbent on a downstream side of the DOC and DPF has been disclosed (refer to Patent Document 5). In this exhaust gas purifying device, after the NO has converted to NO₂ by leading the exhaust gas of the diesel engine to the DOC, and the PM is combustively removed by the PM collected on the DPF and NO₂ reacting. The NO produced from the reaction between PM and NO₂ is absorbed to the NOx absorbent disposed on a downstream side of the DPF, and thus is removed from the exhaust gas. Therefore, according to this exhaust gas purifying device, it is regarded that PM in the exhaust gas discharged from the diesel engine can be combustively removed without causing an increase in the discharged amount of NOx and PM.

In addition, an exhaust gas purifying device equipped with a NOx storage and reduction catalyst on an upstream side of the DPF has been disclosed (refer to Patent Document 6). The NOx storage and reduction catalyst provided to this exhaust gas purifying device possesses both a function as an oxidation catalyst that oxidizes NO in the exhaust gas into NO₂, and a function as a NOx trap catalyst that traps NOx in the exhaust gas as well as desorbs the NOx thus trapped depending on the exhaust gas components flowing therein. As a result, according to this exhaust gas purifying device, it is regarded that NOx purification and PM purification can coexist at high levels, as a result of the PM accumulated amount in the DPF, which is downstream, being able to be maintained within a suitable range due to being able to adjust the NOx trapped amount.

In addition, an exhaust gas purifying method of equipping an active oxygen-releasing material and a DPF with a NOx absorbent has been disclosed (refer to Patent Document 7). According to this exhaust gas purifying method, a DPF is used that supports the active oxygen-releasing agent that captures oxygen when excess oxygen is present in the surroundings and retains this oxygen, and releases the retained oxygen in the form of active oxygen when the oxygen concentration in the surroundings declines. Then, it is regarded that the oxidation reaction of PM on the DPF can be promoted by the active oxygen released from the active oxygen-releasing agent when the air-fuel ratio is switched to rich by performing lean/rich control of the air-fuel ratio of the exhaust gas, whereby the PM can be combustively removed at low temperatures. In addition, it is regarded that the NOx in the exhaust gas can be simultaneously purified by the DPF with NOx absorbent

In addition, an exhaust gas purifying device equipped with a NOx storage and reduction catalyst on an upstream side of the CSF as well as being equipped with a fuel supply device between the CSF and the NOX storage and reduction catalyst has been disclosed (refer to Patent Document 8). According to this exhaust gas purifying device, it is regarded that thermal degradation of the NOx storage and reduction catalyst disposed on an upstream side of the DPF, which makes heat-up control necessary up to at least a set temperature (e.g., 600°C), can be avoided by controlling the heat-up of the DPF.
Patent Document 1: Japanese Unexamined Patent Application Publication No. H5-296027
Patent Document 2: Japanese Unexamined Patent Application Publication No. 2004-132223
Patent Document 3: Japanese Unexamined Patent Application Publication No. 2000-161044
Patent Document 4: Japanese Patent No. 3012249
Patent Document 5: Japanese Unexamined Patent Application Publication No. H9-53442
Patent Document 6: Japanese Unexamined Patent Application Publication No. 2002-047923
Patent Document 7: PCT International Publication No. WO 2001-61160
Patent Document 8: Japanese Unexamined Patent Application Publication No. 2008-2360

Document US2006-0053774 A1 discloses an exhaust treatment system comprising in this order (from upstream to downstream) an oxidation catalyst, a NOx adsorber catalyst and a particulate filter which can comprise a catalytic coating (§48).
Furthermore, document JP2007-296518 discloses the combination of a DOC and a particulate filter, wherein the particulate filter comprises Ag on a composite oxide with oxygen storage capacity and a NO oxidation catalyst.

### DISCLOSURE OF THE INVENTION

### Problems to be Solved by the Invention

However, in the regeneration process using post injection, the oxidation catalyst is installed on the upstream side of the DPF, and the temperature inside the DPF, which is on a downstream side, is made to become a high temperature by the oxidation heat generated when the fuel is oxidized by the oxidation catalyst from injecting fuel from the upstream side of the oxidation catalyst. As a result, in order to suppress deterioration of EM (emissions) and loss in fuel economy due to the fuel injection, it is necessary for the fuel injection time to be shortened to the utmost and performed efficiently. Although shortening of the injection time has come to be dealt with by performing various combustion engine controls, the complication of the control system in the above Patent Documents 2 and 3 is undeniable.

In addition, the PM regeneration process by the CSF supporting a noble metal-based catalyst normally necessitates an unusually high temperature of 550°C to 650°C. In contrast, the oxidation catalyst for HC and CO purification is able to purify CO and HC even if the noble metal amount is not very large; however, a large amount of noble metal is necessary to raise the temperature inside the DPF up to about the PM regeneration process temperature of 600°C. Therefore, the current situation is that the regeneration efficiency is raised by using a large amount of noble metal of at least the amount required in the purification of HC and CO to suppress deterioration of EM and loss in fuel economy.

As stated above, how to avoid complication of the system and an increase in the noble metal amount for an improvement in regeneration efficiency has become an issue in order to suppress deterioration of EM and loss in fuel economy when performing the PM regeneration process. In addition, melting damage of the DPF and degradation of the catalyst accompanying the regeneration process at high temperatures has also become a problem, and thus development of an exhaust gas purifying device that can reduce the load on the device by lowering the regeneration process temperature has been demanded.

On the other hand, although being able to combustively remove PM at low temperatures by causing NO in the exhaust gas to change to NO₂ and causing the NO₂ to react with PM accumulated in the DPF has been disclosed in Patent Document 4, it has been found that this reaction is limited to cases of the NO₂ amount being relatively large. In addition, the NO₂ reacted with PM is not converted into N₂, and almost entirely converts to NO, and the NO will pass through the DPF and be released into the atmosphere. As a result, for the PM discharged from the diesel engine, despite being collected by the DPF and being able to be removed by the reaction with NO₂, most of it is not purified relative to NOx.

In addition, since the NOx absorbent of Patent Document 5 is far-removed from the engine due to being disposed on a downstream side of the DPF, the heat is stripped by the DPF, which has a large heat capacity, a result of which the temperature of the exhaust gas passing through the NOx absorbent will decline. As a result, in the EU actual vehicle test mode of engine cold start, for example, although NOx in the exhaust gas can be absorbed by the NOx adsorbent in a lean atmosphere, adsorption in a rich atmosphere and the reduction reaction of NOx to N₂ do not occur easily.

In addition, sulfur contained in the fuel and engine oil is discharged from the engine, and this sulfur adsorbs to the NOx adsorbent in the form of SOx, whereby the adsorption of NOx will be inhibited. As a result, the exhaust gas needs to be made a rich atmosphere in order to remove the adsorbed SOx on a regular basis, and furthermore, the exhaust gas temperature generally needs to be set to be higher than a case of reducing NOx since the desorption temperature of SOx is higher than NOx, and thus the arrangement of the NOx absorbent on the downstream side of the DPF becomes a disadvantage from the viewpoint of a rise in the exhaust gas temperature.

Furthermore, in order to combustively remove the PM accumulated in the DPF, engine intake throttling and fuel injection in the expansion and exhaust stroke are performed to raise the exhaust gas temperature to at least 600°C; however, the combustion heat of PM in doing so transmits to the NOx adsorbent disposed after the DPF, and may cause thermal degradation thereof.

In addition, according to Patent Document 6, although the promotion of the combustion of PM accumulated in the DPF can be expected by action of the high NO₂ oxidation, the NOx amount trapped in the NOx trap catalyst and the PM accumulated amount accumulated in the DPF are assumed, and control is necessary for adjusting the respective values to within predetermined ranges, a result of which complication of the control system is undeniable.

Moreover, in the case of loading the NOx absorbent onto the DPF in Patent Document 7, a rise in the pressure drop due to the NOx absorbent being coated inside the filter walls and on the surface of the DPF is unavoidable. As a result, it is necessary to set the loading amount of the NOx adsorbent on the DPF to a small amount in order to suppress a rise in pressure drop. If the loading amount of the NOx adsorbent is reduced, the time to become in a saturated state shortens since the NOx amount that can be adsorbed decreases, a result of which the frequency at which the air-fuel ratio of the exhaust gas is switched to rich increases, which may deteriorate the fuel economy. In addition, the NOx adsorbent may undergo thermal degradation due to the heat generated when PM combusts on the DPF.

In addition, with Patent Document 8, the increase in cost due to using a fuel supply device is unavoidable. Furthermore, since it is necessary to make a design taking into account the uniformity of the injection spray into the exhaust gas and safety aspects, complication of the system compared to fuel supply into the engine cylinders for a temperature rise is unavoidable.

As stated above, with conventional exhaust gas purifying devices, it has not been possible to efficiently purify HC, CO, NOx and particulate matter contained in the exhaust gas discharged from an internal combustion engine at low temperatures. Therefore, development of an exhaust gas purifying device that can efficiently purify HC, CO, NOx and particulate matter contained in the exhaust gas discharged from an internal combustion engine at low temperatures has been demanded.

### Means for Solving the Problems

The present inventors have conducted thorough research to solve the above-mentioned issues. As a result thereof, they have found that the above-mentioned issues can be solved by including a DOC, NOx purifying catalyst and a filter comprising a PM oxidation, catalyst and a NO₂ production catalyst, wherein the PM oxidation, catalyst is made by co-loading Ag and Pd on a composite oxide having an oxygen release capacity, thereby arriving at completion of the present invention.

More specifically, the present invention provides the following.

According to a first aspect of the present invention, an exhaust gas purifying device according to claim 1 is provided.

According to the present invention, since Ag, which has a high activity for PM, is loaded on a composite oxide having oxygen release capacity, which is effective in PM combustion, the oxygen release capacity of the composite oxide can be extracted at lower temperatures. More specifically, as a result of the active species Ag being able to be disposed at a contact interface with PM due to the particulate matter oxidation catalyst being included in which Ag is loaded on a composite oxide, the present invention can purify PM more efficiently than conventionally at lower temperature.

In addition, since the first purifying body that purifies HC and CO is disposed at an upstream side of the exhaust gas flow path and the second purifying body that can actively combust PM is disposed at a downstream side of the exhaust gas flow path, it is possible to efficiently purify HC, CO and PM in the exhaust simultaneously. Furthermore, since the second purifying body of the present invention has high PM combustion activity and can combustively remove PM actively, in a case of the present invention being applied to the internal combustion engine of an automobile, a portion of the PM can be continuously combusted during normal running, and the regeneration frequency of the DPF can be reduced.

As described above, since PM can be combustively removed actively in the present invention, in a case of performing the regeneration process on the DPF at approximately 600°C similarly to conventionally, the regeneration time can be shortened compared to conventionally, and deterioration of EM and loss of fuel economy can be suppressed during regeneration. It is thereby possible to simplify fuel injection systems which have been made complicated.

In addition, in a case of performing the regeneration process on the DPF, conventionally a high temperature of around 600°C has been necessary; whereas, according to the present invention, the regeneration process of the DPF is possible at approximately 500°C. Although the time required for regeneration does not change from conventionally in a case of performing the regeneration process on the DPF at approximately 500°C, the deterioration of EM and loss of fuel economy can be suppressed during regeneration compared to conventionally. In addition, damage to the DPF and degradation of the catalyst can be suppressed.

Moreover, since the regeneration process temperature can be lowered, the regeneration efficiency rises, and the amount of noble metal used in the first purifying body on the upstream side can be reduced, thereby cutting cost. Since regeneration process is possible at low temperature, in the case of applying the exhaust gas purifying device of the present invention to the internal combustion engine of an automobile, it is not confined to directly follow the internal combustion engine, and may be used under the floor.

Furthermore, due to the high heat resistance of the composite oxide itself, the second purifying body of the present invention can suppress agglomeration and volatilization of Ag with the interactive effect from Ag being loaded on the composite oxide, and thus has exceptionally high heat resistance. As a result, the exhaust gas purifying device of the present invention is advantageous in layout design, without an influence on exhaust layout, even under the high-heat resistance conditions of a case assuming higher exhaust flows and higher output engines in the future.

It should be noted that, in recent years, NOx emissions discharged from the diesel engine have been considered manageable without a catalyst by engine control using a combination of EGR, supercharging, etc. Therefore, the present embodiment is suitably employed in engine systems according to all lean control (particularly the specification in Europe), whereby the aforementioned effects are adequately exhibited.

According to a second aspect of the present invention, in the exhaust gas purifying device as described in the first aspect, the filter is a filter of wall-flow type composed of porous, fire-resistant ceramic.

In the second aspect of the invention, the second purifying body is configured with a filter of wall-flow type made from a porous fire-resistant ceramic.

According to the present invention, PM can be efficiently collected since the second purifying body is configured by a filter of wall-flow type. In addition, since the walls of the filter are formed from fine holes, when PM passes through this fine hole and breaks through to an adjacent passageway, it can satisfactorily contact with the particulate matter oxidation catalyst supported on the filter, a result of which excellent PM combustion activity is obtained.

According to a third aspect of the present invention, in the exhaust gas purifying device as described in the first or second aspect, the composite oxide is a composite oxide having at least one crystalline structure selected from the group consisting of perovskite-type, spinel-type, rutile-type, delafossite-type, magnetoplumbite-type, ilmenite-type, and fluorite-type.

In the third aspect of the invention, the composite oxide of the second purifying body 14 is configured as at least one selected from the group consisting of perovskite-type, spinel-type, rutile-type, delafossite-type, magnetoplumbite-type, ilmenite-type, and fluorite-type.

Composite oxides having these crystalline structures have favorable heat resistance, and particularly, perovskite-type and fluorite-type have excellent heat resistance. As a result, these composite oxides have substantially consistent PM combustion characteristics, even in a case of being exposed to a high temperature atmosphere. Therefore, according to the present invention, there is no influence on the exhaust layout, even under high-heat resistance conditions.

In addition, since B-site deficient composite oxides are contained in the composite oxides having these crystalline structures, there is an advantage in that noble metals and the like can be loaded on the composite oxides by doping noble metal elements and the like at the B-sites that are deficient.

According to a fourth aspect of the present invention, in the exhaust gas purifying device as described in any one of the first to third aspects, the composite oxide is configured to include at least one element selected from the group consisting of alkali metal elements, alkali earth metal elements and transition metal elements, and performs absorption and release of oxygen by changing the valence of constituent elements thereof.

In the fourth aspect of the present invention, the composite oxide of the second purifying body is configured to include at least one element selected from the group consisting of alkali metal elements, alkali earth metal elements, and transition metal elements.

Absorption and release of oxygen by the composite oxide maintains the balance of electric charge in response to a change in the valence of the constituent elements, thereby cause oxygen vacancy ordering phenomenon inside the lattice of the composite oxide. In regards to this aspect, according to the present invention, the composite oxide of the second purifying body is configured to include one or at least two elements selected from the group consisting of alkali metal elements, alkali earth metal elements, and transition metal elements, and thus the composite oxide realizes oxygen release capacity from changing the valence of the constituent elements, a result of which excellent PM combustion activity is obtained.

In the exhaust gas purifying device, the particulate matter oxidation catalyst is made by co-loading Ag and Pd on the composite oxide.

The particulate matter oxidation catalyst is configured by a catalyst made by co-loading Ag and Pd on the composite oxide.

According to the present invention, by co-loading Ag along with Pd on the composite oxide, it becomes possible to increase the oxygen supply capacity from the noble metal and microparticulate the Ag from the blocking effect by the noble metal. Therefore, the oxygen release capacity can be further improved by the addition of noble metal, as well as improving the PM combustion activity by the microparticulation of the active species Ag.

In the exhaust gas purifying device the second purifying body further includes a NO₂ production catalyst that is supported on the filter and converts NO contained in the exhaust gas into NO₂.

The second purifying body is configured to further include a NO₂ production catalyst that is loaded on the filter and converts NO contained in the exhaust gas into NO_{2.}

Composite oxides having oxygen release capacity are known to have high NO₂ adsorption capacity as well. As a result, the NO₂ produced adsorbs to the surface of the composite oxide having oxygen release capacity due to the composite oxide having oxygen release capacity and the NO₂ production catalyst being made to coexist, a result of which the NO₂ concentration on the surface of composite oxide can be kept high. As a result, according to the present invention, the reaction between oxygen and PM is promoted by the particulate matter oxidation catalyst, as well as the reaction between NO₂ and PM being promoted by Ag, and thus the PM combustion rate increases.

According to a fifth aspect of the present invention , the NO₂ production catalyst is made by loading at least one element selected from the group consisting of Pt, Pd and Rh onto a high-specific surface area carrier.

In the fifth aspect of the invention, the NO₂ production catalyst is configured by a catalyst made by loading at least one element selected from the group consisting of Pt, Pd and Rh onto a high-specific surface area carrier.

According to the present invention, since a NO₂ production catalyst made by loading at least one element selected from Pt, Pd and Rh onto a high-specific surface area carrier is included, the noble metal particles such as of Pt can be miniaturized, and the NO oxidation capacity can be suitably maintained. Furthermore, the reaction between NO₂ and PM can be promoted by Ag, and thus PM can be combustively removed more efficiently.

According to a sixth aspect of the present invention, the high-specific surface area carrier is at least one carrier selected from the group consisting of alumina, silica, titania, ceria and zirconia.

In the sixth aspect of the invention, the high-specific surface area carrier of the NO₂ production catalyst is configured by at least one carrier selected from the group consisting of alumina, silica, titania, ceria and zirconia.

According to the present invention, since the NO₂ production catalyst is configured with at least one high-specific surface area carrier selected from the above-mentioned respective oxides, the agglomeration of noble metal can be suppressed; therefore, it is possible to suppress adherence of poisoning matter such as sulfur contained in the exhaust gas adhering. As a result, it is possible to suppress the catalytic activity of the NO₂ production catalyst from declining.

According to a seventh aspect of the present invention, the first purifying body contains at least one element selected from the group consisting of Pt, Pd and Rh.

In the seventh aspect of the invention, the first purifying body is configured to include at least one element selected from the group consisting of Pt, Pd and Rh.

According to the present invention, suitable purification performance for HC and CO is possessed, and the filter temperature of the second purifying body on the downstream side can be raised by the oxidative combustion according to post injection. As a result, PM can be efficiently combustively removed in the second purifying body.

According to the present invention, an exhaust gas purifying device (e.g., the exhaust gas purifying device 20 described later) for purifying exhaust gas discharged from an internal combustion engine (e.g., the diesel engine 2 described later) includes: a first purifying body (e.g., the first purifying body 23 described later) including an oxidation catalyst for purifying HC and CO in the exhaust gas; a third purifying body (e.g., the third purifying body 25 described later) including a NOx purifying catalyst for purifying NOx in exhaust gas in which an air-fuel ratio has been controlled to lean or rich; and a second purifying body (e.g., the second purifying body 24 described later) for purifying particulate matter in the exhaust gas, in which the second purifying body includes a filter capable of collecting the particulate matter, and a particulate matter oxidation catalyst supported on the filter and made by loading Ag and Pd on a composite oxide having oxygen release capacity and wherein the second purifying body further includes a NO₂ production catalyst that is supported on the filter.

In the present invention, the exhaust gas purifying device is configured to include the first purifying body provided with a DOC for purifying HC and CO in the exhaust gas, the third purifying body provided with a NOx purifying catalyst for purifying NOx in the exhaust gas in which the air-fuel ratio has been controlled to lean or rich, and the second purifying body for purifying PM in the exhaust gas. In addition, in the present invention, the second purifying body is configured to include a filter capable of collecting PM, and a PM oxidation catalyst that is supported on this filter and is made by loading Ag and Pd on a composite oxide having oxygen release capacity.

According to the present invention, since a DOC, NOx purifying catalyst and PM oxidation catalyst are provided, HC, CO, NOx and PM can be efficiently removed even in an operating range under low temperatures. In addition, forced regeneration of the filter is also possible at conditions in which the exhaust gas temperature is low, which can suppress thermal degradation of the NOx purifying catalyst. Furthermore, a cost reduction can be achieved due to the improvement in NOx purification performance and reduction in noble metal amount.

In addition, since a NOx purifying catalyst having a function of purifying NOx according to lean or rich control is used, NOx can be efficiently removed, and PM can be efficiently purified even at low temperatures.

Furthermore, since a PM oxidation catalyst in which Ag is supported on a composite oxide having oxygen release capacity is used, thermal degradation of the NOx purifying catalyst due to rising temperatures during PM combustion can be suppressed, a result of which the NOx purification efficiency can be further raised.

According to the fourth aspect of the present invention, in the exhaust gas purifying device as described in the tenth aspect, the composite oxide is configured to include at least one element selected from the group consisting of alkali earth metal elements, transition metal elements, periodic group 12 elements and periodic group 13 elements, and performs absorption and release of oxygen by changing the valence of constituent elements thereof.

In addition, in the present invention, the composite oxide is configured to include at least one element selected from the group consisting of alkali earth metal elements, transition metal elements, periodic group 12 elements and periodic group 13 elements.

According to the present invention, by using Ag and a composite oxide having a function of absorbing and releasing oxygen, the active oxygen released from the composite oxide is activated on the Ag to react with PM, and thus PM can be oxidatively purified from a low temperature. In addition, the composite oxide having released oxygen absorbs oxygen contained in the exhaust gas, and can release the oxygen again; therefore, high PM oxidation activity can be maintained.

According to the second aspect of the present invention, in the exhaust gas purifying device as described in the tenth or eleventh aspect, the filter is a filter of wall-flow type composed of a porous, fire-resistant ceramic.

In the present invention, the filter constituting the second purifying body is configured by a filter of wall-flow type made from a porous, fire-resistant ceramic.

According to the present invention, since the PM oxidation catalyst is coated on the filter of wall-flow type made from a porous, fire-resistant ceramic, PM can be efficiently collected and removed.

According to an eigth aspect of the present invention, in the exhaust gas purifying device as described in any one of the tenth to twelfth aspects, the NOx purifying catalyst is a NOx trap catalyst containing at least one NOx adsorption element selected from the group consisting of alkali metal elements and alkali earth metal elements, a noble metal element, and a cerium oxide-based material.

In the present invention, the NOx purifying catalyst constituting the third purifying body is configured by a NOx trap catalyst containing: at least one NOx adsorption element selected from the group consisting of alkali metal elements and alkali earth metal elements; a noble metal element; and a cerium oxide-based material.

According to the present invention, by combining a NOx trap catalyst configured to include an alkali metal and the like and a PM oxidation catalyst, thermal degradation of the NOx trap catalyst is suppressed and NOx can be efficiently removed over a wide temperature range.

According to a nineth aspect of the present invention, in the exhaust gas purifying device as described in any one of the tenth to twelfth aspects, the NOx purifying catalyst includes a first catalyst layer and a second catalyst layer, the first catalyst layer contains β zeolite having iron and/or cerium, the second catalyst layer contains a noble metal and a cerium oxide-based material, and the second catalyst layer and the first catalyst layer are sequentially laminated onto a carrier, and the first catalyst layer is configured so as to be the topmost layer.

In the present invention, the NOx purifying catalyst constituting the third purifying body is configured to include a first catalyst layer including β zeolite containing iron and/or cerium, and a second catalyst layer including a noble metal and a cerium oxide-based material. In addition, it is configured by sequentially laminating the second catalyst layer and the first catalyst layer on the carrier such that the first catalyst layer is the topmost layer.

According to the present embodiment, by combining a NOx purification catalyst containing a noble metal, a cerium oxide-based material, β zeolite, etc. and a PM oxidation catalyst, thermal degradation of the NOx purifying catalyst is suppressed and NOx can be efficiently removed over a wide temperature range.

According to the present invention, in the exhaust gas purifying device the first purifying body is disposed at an upstream side of the exhaust gas flow path, the third purifying body is disposed in the exhaust gas flow path on a side further downstream than the first purifying body, and the second purifying body is disposed in the exhaust gas flow path on a side further downstream than the third purifying body.

In the present invention, the first purifying body provided with a DOC, the third purifying body provided with a NOx purifying catalyst, and the second purifying body provided with a PM oxidation catalyst are configured to be disposed in order from an upstream side.

According to the present invention, HC and CO discharged during a cold start can be efficiently purified by disposing the DOC to be the closest to the engine. In addition, since there is no decline in the exhaust gas temperature due to a filter having large heat capacity, from disposing the NOx purifying catalyst on a side more upstream than the filter of the second purifying body, NOx can be efficiently removed even in an operating range of low temperature.

### Effects of the Invention

According to the present invention, it is possible to provide an exhaust gas purifying device that can efficiently purify HC, CO and particulate matter contained in the exhaust discharged from an internal combustion engine. In addition, a regeneration process is possible at lower temperatures than conventionally, and thus it is possible to provide a low cost exhaust gas purifying device.

Furthermore, it is possible to provide an exhaust gas purifying device that can also efficiently purify NOx in addition to HC, CO and particulate matter at low temperatures.

### BRIEF DESCRIPTION OF THE DRAWINGS

FIG. 1 is a block diagram of an exhaust system of a diesel engine according to a first embodiment;
FIG. 2 is a longitudinal sectional view of a catalytic converter; and
FIG. 3 is a block diagram of an exhaust gas purifying device according to a second embodiment.

### EXPLANATION OF REFERENCE NUMERALS

1,2 diesel engine
10, 20 exhaust gas purifying device
11 exhaust gas flow path
12 catalytic converter
13, 23 first purifying body
14, 24 second purifying body
25 third purifying body

### PREFERRED MODE FOR CARRYING OUT THE INVENTION

Hereinafter, preferred embodiments of the present invention will be explained while referring to the drawings.

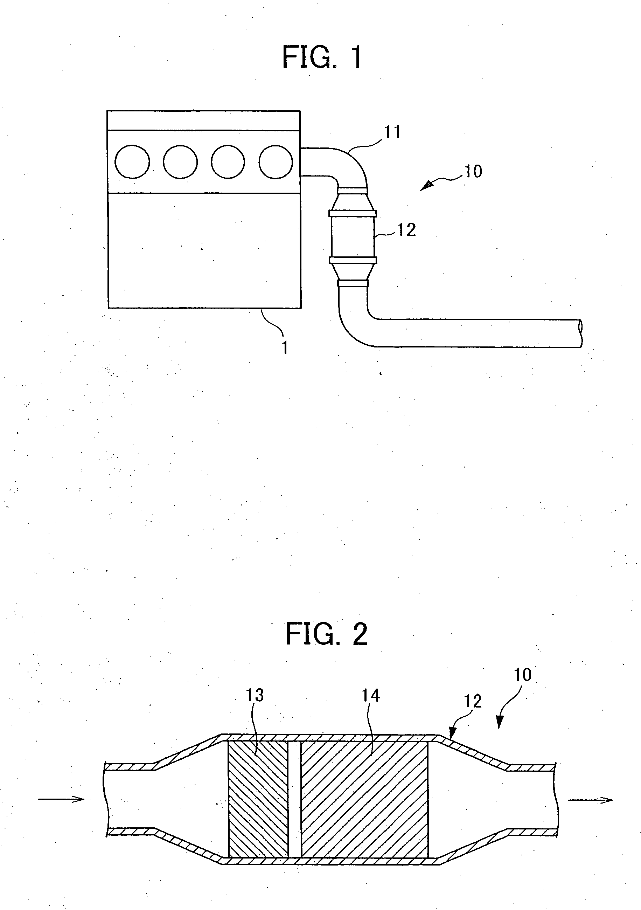

FIG. 1 is a block diagram of an exhaust system layout of a diesel engine 1. An exhaust gas purifying device 10 according to the present embodiment is in communication with the diesel engine 1 via an exhaust gas flow path 11. A longitudinal sectional view of the exhaust gas purifying device 10 is shown in FIG. 2.

As shown in FIG. 2, the exhaust gas purifying device 10 is configured from a catalytic converter 12. The catalytic converter 12 includes a first purifying body 13 provided on an upstream side and a second purifying body 14 provided on a downstream side of the first purifying body 13.

The first purifying body 13 is a purifying body capable of oxidatively removing HC and CO contained in the exhaust gas. More specifically, the first purifying body 13 includes an oxidation catalyst including at least one noble metal elements selected from the group consisting of Pt, Pd and Rh. The first purifying body 13 is configured from a body on which these oxidation catalysts have been loaded on a cordierite honeycomb carrier of cylindrical shape.

The first purifying body 13 can be obtained by preparing an oxidation catalyst slurry containing the above-mentioned noble metal elements, and then loading by impregnating the cordierite honeycomb carrier and calcining. The first purifying body 13 obtained in this way is fixed and retained inside a casing of cylindrical shape.

The second purifying body 14 is a purifying body capable of purifying PM contained in the exhaust gas. The second purifying body 14 includes a filter capable of collecting particulate matter, and a particulate matter oxidation catalyst that is loaded on this filter and is made by loading at least Ag on a composite oxide having an oxygen release capacity. The filter configuring the second purifying body 14 is a filter of wall-flow type made from a porous, fire-resistant ceramic, i.e. cordierite.

A filter of wall-flow honeycomb form is preferably used from the viewpoint of pressure drop and PM filtering efficiency. The filter of wall-flow type is configured from inlet side cells having a downstream side blocked, outlet side cells adjacent to the inlet side cells and having an upstream side blocked, and porous cell barrier walls that divide the inlet side cells from the outlet side cells. The filter of wall-flow type is produced by forming a straight-flow honeycomb body in which both sides of the cells are open, and then blocking both ends as described above.

The composite oxide configuring the particulate matter oxidation catalyst is a composite oxide having at least.one crystalline structure selected from the group consisting of perovskite-type, spinel-type, rutile-type, delafossite-type, magnetoplumbite-type, ilmenite-type, and fluorite-type. Among these, perovskite-type and fluorite-type are preferable from the viewpoint of heat resistance.

In addition, the composite oxide configuring the particulate matter oxidation catalyst is configured to include at least one element selected from the group consisting of alkali metal elements, alkali earth metal elements, and transition metal elements. The valence of the elements configuring the composite oxide can thereby change, whereby oxygen release capacity is realized.

In order for the composite oxide to realize oxygen release capacity, it is preferable for at least one type of polyvalent element to be contained. As the transition metal elements, at least one selected from the group consisting of Zr, V, Cr, Mn, Fe, Co, Cu, Nb, Ta, Mo, W, Ce, Pr, Sm, Eu, Tb, Yb, Pt, Pd, Rh, Ir, and Ru can be exemplified. In addition, it is preferable for at least one selected from the group consisting of La, Nd, Y, Sc, Hf, Ca, Sr and Ba, which have relatively large ionic radii without valence change, to be contained from the viewpoint of structural stability.

Furthermore, the particulate matter oxidation catalyst is a material made by co-loading Ag and Pd on the composite oxide. In particular, Pd is preferable from the viewpoint of increased oxygen release capacity and Ag refinement.

The added amount of noble metal is a small amount at 0.1% by mass to 3% by mass relative to the particulate matter oxidation catalyst. It is preferably 0.5% by mass to 2% by mass. In a case of being less than 0.1% by mass, the oxygen release capacity will decline, and in a case of being more than 3% by mass, the interaction between the noble metal and composite oxide will strengthen, and is not preferable due to the effect of loading Ag being harmed.

The preparation method of the composite oxide is not particularly limited, and a nitrate decomposition method, organic acid polymerized complex method, or the like can be employed. In addition, the method for co-loading Ag and noble metal elements on the composite oxide is not particularly limited, and an impregnating method, decomposition-precipitation method, or the like can be suitably employed.

The second purifying body 14 further includes a NO₂ production catalyst supported on the filter that converts NO contained in the exhaust gas into NO₂. The NO₂ production catalyst is made by loading at least one element selected from the group consisting of Pt, Pd and Rh onto a high-specific surface area carrier, and the high-specific surface area carrier is at least one carrier selected from the group consisting of alumina, silica, titania, ceria and zirconia.

Similarly to the first purifying body 13, the second purifying body 14 can be obtained by preparing a particulate matter oxidation catalyst slurry of the above such catalyst composition, and then loading by impregnating a filter of wall-flow type made from cordierite, and calcining. The second purifying body 14 obtained in this way is fixed and retained inside of a casing of cylindrical shape.

In order to avoid pressure drop occurring in a case of the accumulated amount of PM collected by the filter having exceeded a certain fixed amount, a PM regeneration process is carried out on the second purifying body 14. More specifically, the PM regeneration process is carried out by post injection. During this PM regeneration process, the fuel component from post injection is oxidatively removed by the first purifying body 13, while the PM is combustively removed by the second purifying body 14 of the next stage, employing the oxidation heat generated by the first purifying body 13.

The following effects are exerted by the exhaust gas purifying device 1 according to the present embodiment.

The exhaust gas purifying device 10 is configured to include a first purifying body 13 that is provided inside the exhaust gas flow path 11 and purifies HC and CO, and the second purifying body 14 that is provided on a more downstream side than the first purifying body 13 and purifies particulate matter. In addition, the second purifying body 14 is configured to include a particulate matter oxidation catalyst made by loading Ag and Pd on a composite oxide having oxygen release capacity.

Since Ag, which has a high activity for PM, is loaded on a composite oxide having oxygen release capacity, which is effective in PM combustion, the oxygen release capacity of the composite oxide can be extracted at lower temperatures. More specifically, as a result of the active species Ag being able to be disposed at a contact interface with PM due to the particulate matter oxidation catalyst being included in which Ag is loaded on a composite oxide, the present embodiment can purify PM more efficiently than conventionally at lower temperature.

In addition, since the first purifying body 13 that purifies HC and CO is disposed at an upstream side of the exhaust gas flow path 11 and the second purifying body 14 that can actively combust PM is disposed at a downstream side of the exhaust gas flow path 11, it is possible to efficiently purify HC, CO and PM in the exhaust simultaneously. Furthermore, since the second purifying body 14 of the present embodiment has high PM combustion activity and can combustively remove PM actively, a portion of the PM can be continuously combusted during normal running, and the regeneration frequency of the second purifying body 14, i.e. regeneration frequency of the DPF, can be reduced.

As described above, since PM can be combustively removed actively in the present embodiment, in a case of performing the regeneration process on the DPF at approximately 600°C similarly to conventionally, the regeneration time can be shortened compared to conventionally, and deterioration of EM and loss of fuel economy can be suppressed during regeneration. It is thereby possible to simplify fuel injection systems which have been made complicated.

In addition, in a case of performing the regeneration process on the DPF, conventionally a high temperature of around 600°C has been necessary; whereas, according to the present embodiment, the regeneration process of the DPF is possible at approximately 500°C. Although the time required for regeneration does not change from conventionally in a case of performing the regeneration process on the DPF at approximately 500°C, the deterioration of EM and loss of fuel economy can be suppressed during regeneration compared to conventionally. In addition, damage to the DPF and degradation of the catalyst can be suppressed.

Moreover, since the regeneration process temperature can be lowered, the regeneration efficiency rises, and the amount of noble metal used in the first purifying body 13 on the upstream side can be reduced, thereby cutting cost. The exhaust gas purifying device 10 of the present embodiment is not confined to directly follow the diesel engine 1, and may be used under the floor since regeneration process is possible at low temperature.

Furthermore, due to the high heat resistance of the composite oxide itself, the second purifying body 14 of the present embodiment can suppress agglomeration and volatilization of Ag with the interactive effect from Ag being loaded on the composite oxide, and thus has exceptionally high heat resistance. As a result, the exhaust gas purifying device 10 of the present embodiment is advantageous in layout design, without an influence on exhaust layout, even under the high-heat resistance conditions of a case assuming higher exhaust flows and higher output engines in the future.

It should be noted that, in recent years, NOx emissions discharged from the diesel engine 1 have been considered manageable without a catalyst by engine control using a combination of EGR, supercharging, etc.; however, the present embodiment is suitably employed in engine systems according to all lean control (particularly the specification in Europe), whereby the aforementioned effects are adequately exhibited.

In the present embodiment, the second purifying body 14 is configured with a filter of wall-flow type made from a porous fire-resistant ceramic.

PM can be efficiently collected since the second purifying body 14 is configured by a filter of wall-flow type. In addition, since the walls of the filter are formed from fine holes, when PM passes through this fine hole and breaks through to an adjacent passageway, it can satisfactorily contact with the particulate matter oxidation catalyst supported on the filter, a result of which excellent PM combustion activity is obtained.

The composite oxide of the second purifying body 14 is configured as at least one selected from the group consisting of perovskite-type, spinel-type, rutile-type, delafossite-type, magnetoplumbite-type, ilmenite-type, and fluorite-type.

Composite oxides having these crystalline structures have favorable heat resistance, and particularly, perovskite-type or fluorite-type have excellent heat resistance. As a result, these composite oxides have substantially consistent PM combustion characteristics, even in a case of being exposed to a high temperature atmosphere. Therefore, according to the present embodiment, there is no influence on the exhaust layout, even under high-heat resistance conditions.

In addition, since B-site deficient composite oxides are contained in the composite oxides having these crystalline structures, there is an advantage in that noble metals and the like can be loaded on the composite oxides by doping noble metal elements and the like at the B-sites that are deficient.

In the present embodiment, the composite oxide of the second purifying body 14 is configured to include at least one element selected from the group consisting of alkali metal elements, alkali earth metal elements, and transition metal elements.

Absorption and release of oxygen by the composite oxide maintains the balance of electric charge in response to a change in the valence of the constituent elements, thereby cause oxygen vacancy ordering phenomenon inside the lattice of the composite oxide. In regards to this aspect, according to the present embodiment, the composite oxide of the second purifying body 14 is configured to include at least one element selected from the group consisting of alkali metal elements, alkali earth metal elements, and transition metal elements, and thus the composite oxide realizes oxygen release capacity from changing the valence of the constituent elements, a result of which excellent PM combustion activity is obtained.

The particulate matter oxidation catalyst is configured by a catalyst made by co-loading Ag and Pd on the composite oxide.

By co-loading Ag along with Pd on the composite oxide, it becomes possible to increase the oxygen supply capacity from the noble metal and microparticulate the Ag from the blocking effect by the noble metal. Therefore, the oxygen release capacity can be further improved by the addition of noble metal, as well as improving the PM combustion activity by the microparticulation of the active species Ag.

The second purifying body 14 is configured to further include a NO₂ production catalyst that is loaded on the filter and converts NO contained in the exhaust gas into NO₂.

Composite oxides having oxygen release capacity are known to have high NO₂ adsorption capacity as well. As a result, the NO₂ produced adsorbs to the surface of the composite oxide having oxygen release capacity due to the composite oxide having oxygen release capacity and the NO₂ production catalyst being made to coexist, a result of which the NO₂ concentration on the surface of composite oxide can be kept high. As a result, according to the present embodiment, the reaction between oxygen and PM is promoted by the particulate matter oxidation catalyst, as well as the reaction between NO₂ and PM being promoted by Ag, and thus the PM combustion rate increases.

The NO₂ production catalyst is configured by a catalyst made by loading at least one element selected from the group consisting of Pt, Pd and Rh onto a high-specific surface area carrier.

Since a NO₂ production catalyst made by loading at least one element selected from Pt, Pd and Rh onto a high-specific surface area carrier is included, the noble metal particles such as of Pt can be miniaturized, and the NO oxidation capacity can be suitably maintained. Furthermore, the reaction between NO₂ and PM can be promoted by Ag, and thus PM can be combustively removed more efficiently.

The high-specific surface area carrier of the NO₂ production catalyst is configured by at least one carrier selected from the group consisting of alumina, silica, titania, ceria and zirconia.

Since the NO₂ production catalyst is configured with at least one high-specific surface area carrier selected from the above-mentioned respective oxides, the agglomeration of noble metal can be suppressed; therefore, it is possible to suppress poisoning due to matter such as sulfur contained in the exhaust gas adhering. As a result, it is possible to suppress the catalytic activity of the NO₂ production catalyst from declining.

The first purifying body 13 is configured to include at least one element selected from the group consisting of Pt, Pd and Rh.

Suitable purification performance for HC and CO is possessed, and the filter temperature of the second purifying body 14 on the downstream side can be raised by the oxidative combustion according to post injection. As a result, PM can be efficiently combustively removed in the second purifying body 14.

### Invention

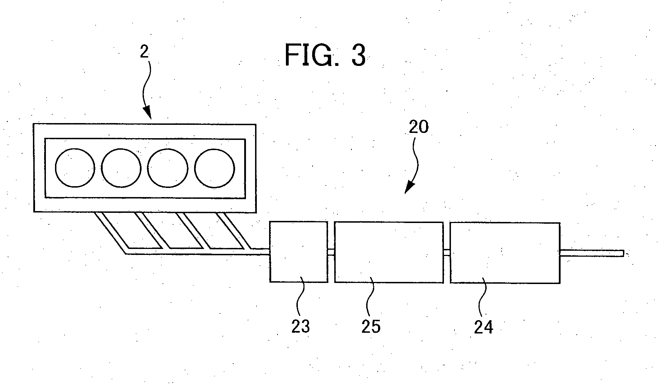

A block diagram of an exhaust gas purifying device 20 according to the present invention is shown in FIG. 3. As shown in FIG. 3, the exhaust gas purifying device 20 is disposed in the exhaust system of a diesel engine 2. The exhaust gas purifying device 20 according to the present invention includes a first purifying body 23 disposed upstream, a third purifying body 25 disposed midstream, and a second purifying body 24 disposed downstream.

The first purifying body 23 includes a DOC for oxidatively purifying HC and CO in the exhaust gas. A conventional, well-known DOC in which a noble metal such as Pt, Pd and Rh, alumina, zeolite, etc. are supported on an open-flow honeycomb can be used as the DOC.

The first purifying body 23 is fixed and retained in a casing of cylindrical shape, for example. In addition, a many-in-one catalytic converter can be made by retaining the second purifying body 24 and the third purifying body 24 in the same casing.

The third purifying body 25 includes a NOx purifying catalyst for purifying NOx in the exhaust gas in which the air-fuel ratio is controlled to lean or rich. More specifically, a NOx trap catalyst containing: at least one NOx adsorbing element selected from the group consisting of alkali metal elements and alkali earth metal elements; noble metal elements; and a cerium oxide-based material or zeolite can be used as the NOx purifying catalyst.

Herein, at least one noble metal element selected from the group consisting of Pt, Pd and Rh are preferably used as the noble metal elements.

Similarly to the first purifying body 23, the third purifying body 25 is fixed and retained in a casing of cylindrical shape, for example.

In addition, the NOx purifying catalyst using a cerium oxide-based material or zeolite includes β zeolite containing iron and/or cerium, a noble metal such as Pt, Pd and Rh and a cerium oxide-based material can be used.

Preferably, a NOx purifying catalyst having a two-layer structure is preferably used as the NOx purifying catalyst. More specifically, a NOx purifying catalyst is preferably used that includes a first catalyst layer having β zeolite containing iron and/or cerium and a second catalyst layer having noble metals and a cerium oxide-based material, and is configured by laminating the second catalyst layer and the first catalyst layer on the carrier in order such that the first catalyst layer is the topmost layer.

The second purifying body 24 includes a filter capable of collecting PM, and a PM oxidation catalyst that is supported on this filter and has oxygen release capacity. More specifically, a PM oxidation catalyst made by loading at least Ag on a composite oxide having oxygen release capacity is included.

Similarly to the first purifying body 23 and the third purifying body 25, the second purifying body 24 is fixed and retained in a casing of cylindrical shape, for example.

The filter is a filter of wall-flow type made from a porous, fire-resistant ceramic, i.e. cordierite. A filter of wall-flow honeycomb form is preferably used from the viewpoint of press drop and PM filtering efficiency. The filter of wall-flow type is configured from inlet side cells having a downstream side blocked, outlet side cells adjacent to the inlet side cells and having an upstream side blocked, and porous cell barrier walls that divide the inlet side cells from the outlet side cells. The filter of wall-flow type is produced by forming a straight-flow honeycomb body in which both sides of the cells are open, and then blocking both ends as described above.

A composite oxide configured to include at least one element selected from the group consisting of alkali earth metal elements, transition metal elements, periodic group 12 elements and periodic group 13 elements is used as the composite oxide configuring the PM oxidation catalyst. The valence of the elements constituting the composite oxide thereby changes, whereby the oxygen storage/release capacity is realized.

In addition, since the performance of converting NO in the exhaust gas into NO₂ improves due to further combining at least one noble metal selected from the group consisting of Pt, Pd and Rh, it is preferable as a PM oxidation catalyst. The reaction between NO₂, which has strong oxidizing power, and PM is thereby promoted, whereby the performance for oxidatively purifying PM improves.

The preparation method of the composite oxide is not particularly limited, and a nitrate decomposition method, organic acid polymerized complex method, or the like can be employed. In addition, the method for loading Ag and noble metal elements on the composite oxide is not particularly limited, and an impregnating method, decomposition-precipitation method, or the like can be suitably employed.

Similarly to the first purifying body 23, the second purifying body 24 can be obtained by preparing a PM oxidation catalyst slurry of the above such catalyst composition, and then loading by impregnating a filter of wall-flow type made from cordierite, and calcining.

In order to avoid pressure drop occurring in a case of the accumulated amount of PM collected by the filter having exceeded a certain fixed amount, a filter regeneration process is carried out on the second purifying body 24. More specifically, the filter regeneration process is carried out by post injection. During this filter regeneration process, the fuel component from post injection is oxidatively removed by the first purifying body 23, while the oxidation heat produced by the first purifying body 23 is employed in the purification of NOx in the third purifying body 25 and the purification of PM in the second purifying body 24 of the next stages.

The following effects are exerted by the exhaust gas purifying device 20 according to the present invention.

In the present invention, the exhaust gas purifying device 20 is configured to include the first purifying body 23 provided with a DOC for purifying HC and CO in the exhaust gas, the third purifying body 25 provided with a NOx purifying catalyst for purifying NOx in the exhaust gas in which the air-fuel ratio has been controlled to lean or rich, and the second purifying body 24 for purifying PM in the exhaust gas. In addition, the second purifying body 24 is configured to include a filter capable of collecting PM, and a PM oxidation catalyst that is supported on this filter and is made by loading at least Ag on a composite oxide having oxygen release capacity.

According to the present invention, since a DOC, NOx purifying catalyst and PM oxidation catalyst are provided, HC, CO, NOx and PM can be efficiently removed even in an operating range under low temperatures. In addition, forced regeneration of the filter is also possible at conditions in which the exhaust gas temperature is low, which can suppress thermal degradation of the NOx purifying catalyst. Furthermore, a cost reduction can be achieved due to the improvement in NOx purification performance and reduction in noble metal amount.

In addition, since a NOx purifying catalyst having a function of purifying NOx according to lean or rich control is used, NOx can be efficiently removed, and PM can be efficiently purified even at low temperatures.

Furthermore, since a PM oxidation catalyst in which Ag is supported on a composite oxide having oxygen release capacity is used, thermal degradation of the NOx purifying catalyst due to rising temperatures during PM combustion can be suppressed, a result of which the NOx purification efficiency can be further raised.

In addition, in the present invention, the composite oxide is configured to include at least one element selected from the group consisting of alkali earth metal elements, transition metal elements, periodic group 12 elements and periodic group 13 elements. ,

According to the present invention, by using Ag and a composite oxide having a function of absorbing and releasing oxygen, the active oxygen released from the composite oxide is activated on the Ag to react with PM, and thus PM can be oxidatively purified from a low temperature. In addition, the composite oxide having released oxygen absorbs oxygen contained in the exhaust gas, and can release the oxygen again; therefore, high PM oxidation activity can be maintained.

In the present invention, the filter constituting the second purifying body 24 is configured by a filter of wall-flow type made from a porous, fire-resistant ceramic.

According to the present invention, since the PM oxidation catalyst is coated on the filter of wall-flow type made from a porous, fire-resistant ceramic, PM can be efficiently collected and removed.

In the present invention, the NOx purifying catalyst constituting the third purifying body 25 is configured by a NOx trap catalyst containing: at least one NOx adsorbing element selected.from the group consisting of alkali metal elements and alkali earth metal elements; a noble metal element; and a cerium oxide-based material.

According to the present invention, by combining a NOx trap catalyst configured to include an alkali metal and the like and a PM oxidation catalyst, thermal degradation of the NOx trap catalyst is suppressed and NOx can be efficiently removed over a wide temperature range.

In the present invention, the NOx purifying catalyst constituting the third purifying body 25 is configured to include a first catalyst layer including β zeolite containing iron and/or cerium, and a second catalyst layer including a noble metal and a cerium oxide-based material. In addition, it is configured by sequentially laminating the second catalyst layer and the first catalyst layer on the carrier such that the first catalyst layer is the topmost layer.

According to the present invention, by combining a NOx purification catalyst containing a noble metal, a cerium oxide-based material, β zeolite, etc. and a PM oxidation catalyst, thermal degradation of the NOx purifying catalyst is suppressed and NOx can be efficiently removed over a wide temperature range.

In the present invention, the first purifying body 23 provided with a DOC, the third purifying body 25 provided with a NOx purifying catalyst, and the second purifying body 24 provided with a PM oxidation catalyst are configured to be disposed in order from an upstream side.

According to the present invention, HC and CO discharged during a cold start can be efficiently purified by disposing the DOC to be the closest to the engine. In addition, since there is no decline in the exhaust gas temperature due to a filter having large heat capacity, from disposing the NOx purifying catalyst on a side more upstream than the filter of the second purifying body 24, NOx can be efficiently removed even in an operating range of low temperature.

### EXAMPLES

Although the present invention will be explained in further detail next based on the Examples, the present invention is not to be limited to these.

### Example 1 (not according to invention)

### Preparation of Particulate Matter Oxidation Catalyst

### (1%Pd/30%Ag/CeZrO₂ by mass)

A high-specific surface area fluorite made by Anan Kasei Co., Ltd. (Ce:Zr = 2:8 (mass ratio), specific surface area = 71 m²/g), silver nitrate, palladium nitrate, and distilled water were measured to make a predetermined composition, and then loaded by impregnating in an evaporator. After drying the product at 200°C for 1 hour, calcining was performed at 700°C for 2 hours, thereby preparing catalyst A.

### Preparation of NO₂ Production Catalyst (14%PtPd/Al₂O₃ by mass)

Commercially available special grade reagent palladium nitrate, platinum nitrate, γ alumina, and an aqueous solution were measured so as to make a predetermined composition, and then loaded by impregnating in an evaporator. After drying the product at 200°C for 1 hour, calcining was performed at 700°C for 2 hours, thereby preparing catalyst B.

### Preparation of DOC (30%Pt/Al₂O₃ by mass)

Commercially available special grade reagent platinum nitrate, γ alumina, and an aqueous solution were measured so as to make a predetermined composition, and then loaded by impregnating in an evaporator. After drying the product at 200°C for 1 hour, calcining was performed at 700°C for 2 hours, thereby preparing catalyst C.

### DPF Carrier

### Lower Layer

The catalyst A, water, SiO₂ sol, and alumina balls were placed in a container, and wet milling was performed overnight using a ball mill to make the catalyst slurry A. A DPF (volume of 2 L) was immersed in the catalyst slurry A, then extracted therefrom, and the excess slurry was removed with air blowing. This was dried at 200°C for 2 hours, and then weight measurement was conducted. This operation was repeated until the loaded amount had become 30 g/L, and then calcining was performed at 700°C for 2 hours.

### Upper Layer

The catalyst B, water, SiO₂ sol, and alumina balls were placed in a container, and wet milling was performed overnight using a ball mill to make the catalyst slurry B. The DPF on which the catalyst A had been loaded by the above-mentioned operation was immersed in the catalyst slurry B, then extracted therefrom, and the excess slurry was removed with air blowing. This was dried at 200°C for 2 hours, and then weight measurement was conducted. This operation was repeated until the loaded amount had become 10 g/L, and then calcining was performed at 700°C for 2 hours.

### Honeycomb Carrier of DOC

The catalyst C, water, SiO₂ sol, and alumina balls were placed in a container, and wet milling was performed overnight using a ball mill to make the catalyst slurry C. A cordierite honeycomb (volume of 1 L) was immersed in the catalyst slurry C, then extracted therefrom, and the excess slurry was removed with air blowing. This was dried at 200°C for 2 hours, and then weight measurement was conducted. This operation was repeated until the loaded amount had become 20 g/L, and then calcining was performed at 700°C for 2 hours.

### Converter Manufacture

Assembly was performed so as to make the catalyzed DPF manufactured, i.e. CSF (second purifying body) and DOC (first purifying body), in the order of DOC, CSF from the upstream side, thereby manufacturing a many-in-one catalytic converter.

### PM Regeneration Process

The catalytic converter thus manufactured was disposed directly following a 2.2 L diesel engine, and the PM regeneration process was conducted. The PM regeneration process was conducted by setting the engine revolution speed to 3000 rpm and the fuel injection amount to 10 mg/s. During the PM regeneration process, the accumulated amount of PM was set to 10 g, the regeneration process was performed for 2 minutes at each temperature, the weight before and after the process was measured, and this operation was repeated until the PM had been completely burned. The total time required until 90% of the PM is burned was defined as the PM regeneration process time.

### Example 2 (not according to invention)

Except for the catalyst loading amount of the oxidation catalyst being set to 10 g/L, a catalytic converter was manufactured by performing the same operations as Example 1, and the PM regeneration process was conducted at the same conditions as Example 1.

### Example 3 (not according to invention)

A catalytic converter the same as Example 1 was manufactured by performing similar operations as Example 1. Subsequently, a continuous combustion experiment was conducted instead of the PM regeneration process conducted on Examples 1 and 2. More specifically, with an engine and exhaust layout similar to the PM regeneration process conducted on Examples 1 and 2, five cycles of the NEDC mode (cycle stipulated by European Emissions Measurement Method, New European Driving Cycle) were driven, and the continuous combustion amount was calculated from the measured values of weight before and after.

### Comparative Example 1

### Preparation of DOC (30%Pt/Al₂O₃ by mass)

Operations similar to Example 1 were performed to prepare the catalyst C.

### DPF Carrier

The catalyst C, water, SiO₂ sol, and alumina balls were placed in a container, and wet milling was performed overnight using a ball mill to make the catalyst slurry C. A DPF was immersed in the catalyst slurry C, then extracted therefrom, and the excess slurry was removed with air blowing. This was dried at 200°C for 2 hours, and then weight measurement was conducted. This operation was repeated until the loaded amount had become 13 g/L, and then calcining was performed at 700°C for 2 hours.

### Honeycomb Carrier of DOC

A cordierite honeycomb was immersed in the catalyst slurry C prepared by the above-mentioned operation, then extracted therefrom, and the excess slurry was removed with air blowing. This was dried at 200°C for 2 hours, and then weight measurement was conducted. This operation was repeated until the loaded amount had become 20 g/L, and then calcining was performed at 700°C for 2 hours.

### Converter Manufacture

Assembly was performed so as to make the catalyzed DPF manufactured, i.e. CSF (second purifying body) and DOC (first purifying body), in the order of DOC, CSF from the upstream side, thereby manufacturing a catalytic converter.

### PM Regeneration Process

Under similar conditions to Example 1, the PM regeneration process was conducted on the catalytic converter thus manufactured.

### Comparative Example 2

Except for the catalyst loading amount of the DOC being set to 10 g/L, the catalytic converter was manufactured by performing the same operations as Example 1, and PM regeneration process was conducted at the same conditions as Comparative Example 1.

### Comparative Example 3

A catalytic converter the same as Comparative Example 1 was manufactured by performing similar operations as Comparative Example 1. Subsequently, a continuous combustion experiment was conducted under similar conditions to Example 3, instead of the PM regeneration process.

The constitution, evaluation criteria and evaluation results of Examples 1 to 3 and Comparative Examples 1 to 3 are shown in Tables 1 to 3.

**Table 1**

| | DOC | DOC noble metal amount | CSF | Evaluation criteria |
|---|---|---|---|---|
| Example 1 | Pt/Al₂O₃ | 6 g | PdAg/CeZrO₂+PtPd/Al₂O₃ | PM regeneration process |
| Example 2 | Pt/Al₂O₃ | 3 g | PdAg/CeZrO₂+PtPd/Al₂O₃ | PM regeneration process |
| Example 3 | Pt/Al₂O₃ | 6 g | PdAg/CeZrO₂+PtPd/Al₂O₃ | Continuous combustion |
| Comparative Example 1 | Pt/Al₂O₃ | 6 g | Pt/Al₂O₃ | PM regeneration process |
| Comparative Example 2 | Pt/Al₂O₃ | 3 g | Pt/Al₂O₃ | PM regeneration process |
| Comparative Example 3 | Pt/Al₂O₃ | 6 g | Pt/Al₂O₃ | Continuous combustion |

**Table 2**

| | DOC Pt amount | CSF internal temperature | PM regeneration process time |
|---|---|---|---|
| Comparative Example 1 | 6 g | 608 °C | 6.6 minutes |
| Comparative Example 2 | 3 g | 514 °C | 36.3 minutes |
| Example 1 | 6 g | 603 °C | 2.1 minutes |
| Example 2 | 3 g | 512 °C | 8.6 minutes |

**Table 3**

| | PM weight |
|---|---|
| Comparative Example 3 | 2.7 g |
| Example 3 | 1.8 g |

First, specific cases for the perspective of the PM regeneration process will be explained.

Table 2 shows the CSF internal temperature and PM regeneration process time in the case of changing the Pt amounts of the DOC (first purifying body). As shown in Table 2, for Comparative Example 1, the noble metal amount of the DOC was 6 g, the CSF internal temperature was 608°C and the PM regeneration process time was 6.6 minutes.

In contrast, for Comparative Example 2, the noble metal amount was half that of Comparative Example 1 at 3 g, and in this case, the CSF internal temperature was only made to rise to 514°C and the PM regeneration time also required a long time at 36.3 minutes. From these results, there is considered to be drastic deterioration in EM and loss in fuel economy in the Comparative Examples. This shows that, by decreasing the noble metal amount of the DOC, the combustion heat is not reached without the oxidative capacity of fuel such as HC by post injection, and since being a low temperature at 514°C, the NO to NO₂ production capacity of the CSF, which is a noble metal-based catalyst, becomes weak, and combustion of the PM becomes difficult. Furthermore, it is believed that, if the noble metal amount decreases more than this, the current HC and CO oxidative capacity itself will be lost, and the EM value will deteriorate.

Based on the above, it is considered that, under the conditions of the Comparative Examples, the required noble metal amount of the DOC in the regeneration process of approximately 600°C is a minimum of 6 g, and in a case of the noble metal amount of the DOC decreasing past 6 g, it is impossible to perform the regeneration process of PM with the current noble metal-based CSF.

In contrast to these Comparative Examples, in Example 1, the noble metal amount of the DOC was set to 6 g, and the CSF internal temperature was 603°C. Contrary to Comparative Example 1, since PM could be actively combusted the PM regeneration process time until able to actively combust PM was found to be able to be drastically shortened to 2.1 minutes for Example 1. A drastic reduction in the fuel injection amount and a drastic reduction in EM during regeneration are thereby made possible. In addition, simplification of a complicated fuel injection system is thereby made possible.

Next, with Example 2, it was found that, although the noble metal amount of the DOC was set to 3 g and the CSF internal temperature became 512°C, similarly to Comparative Example 2, since PM could be actively combusted, the PM regeneration process time was almost unchanged from Comparative Example 1, even though the temperature decreased. From this, the deterioration in EM and loss in fuel economy during regeneration can be suppressed more than at high temperature due to the temperature reduction, and melting damage of the DPF and catalyst degradation can be further suppressed. In addition, since the regeneration efficiency improves by reducing the regeneration process temperature, the noble metal amount in the upstream side HC and CO purifying body can be decreased, whereby the cost can be cut. Furthermore, due to the fact that the regeneration process is possible at low temperature, it is considered that use under the floor naturally in addition to immediately following is possible.

Next, a specific case for the perspective of continuous combustion will be explained.

As shown in Table 3, the weight of PM was 1.8 g for Example 3, which was recognized to be approximately 30% less than Comparative Example 3. From these results, it is considered that Comparative Example 3 has a regeneration frequency 1.5 times relative to Example 3, in a case of the trigger for PM regeneration being fixed to a PM amount. Therefore, from these results it was found that the deterioration in EM and loss in fuel economy could be drastically reduced since the regeneration process number can be reduced according to the Examples.

### Example 4

### Manufacture of First Purifying Body (DOC)

An aqueous solution was prepared in which a soluble Pt salt had been dissolved at a predetermined concentration, and then impregnated into activated alumina. Subsequently, Pt/Al₂O₃ fine powder was obtained by drying this at 200°C for 2 hours and calcining at 500°C for 2 hours. The Pt/Al₂O₃ fine powder thus obtained, β zeolite, SiO₂ sol and a proper amount of ion-exchanged water were mixed, and wet milling was performed thereon to prepare a slurry. A monolith support of straight-flow structure having a diameter of 143 mm, length of 60 mm, 400 cpi and volume of 1.0 L was prepared, deposited on in the above-mentioned slurry, then extracted therefrom and the excess slurry was removed with air blowing. The first purifying body equipped with the DOC was obtained by drying this at 200°C for 2 hours, then calcining at 500°C for 2 hours.

### Manufacture of Third Purifying Body (NOx Purifying Catalyst)

An aqueous solution in which a soluble Pt salt had been dissolved at a predetermined concentration, various fine powders (ceria powder, ceria-praseodymium-lanthanum composite oxide powder, zirconia-neodymium composite powder, and active alumina) SiO₂ sol, and a proper amount of ion-exchanged water were mixed, and wet milling was performed thereon to prepare a slurry. A monolith support of straight-flow structure having a diameter of 143 mm, length of 121 mm, 400 cpi and volume of 2.0 L was prepared, deposited on in the above-mentioned slurry, then extracted therefrom and the excess slurry was removed with air blowing. After drying this at 200°C for 2 hours, calcination was performed at 500°C for 2 hours.

Subsequently, iron and ceria ion-exchanged β zeolite powder, active-alumina powder, SiO₂ sol, and a proper amount of ion-exchanged water were mixed, and wet milling was performed thereon to prepare a slurry. After the above-mentioned monolith support on which the Pt, etc. was loaded had been deposited on in this slurry, it was extracted therefrom and the excess slurry was removed with air blowing. The third purifying body equipped with the NOx purifying catalyst was obtained by drying this at 200°C for 2 hours, then calcining at 500°C for 2 hours.

### Manufacture of Second Purifying Body (PM Oxidation Catalyst)

A mixture was prepared by mixing a silver nitrate aqueous solution, palladium nitrate aqueous solution and ion-exchanged water, and was impregnated into a high-specific surface area ceria-zirconia made by Anan Kasei Co., Ltd. (Ce:Zr = 2:8 (mass ratio), specific surface area: 71 m²/g). Next, a ceria-zirconia powder on which Ag and Pd had been loaded was obtained by drying at 200°C for 2 hours, and then calcining at 700°C for 2 hours. A slurry was prepared by mixing the Ag-Pd/ceria-zirconia powder thus obtained, SiO₂ sol, and a proper amount of ion-exchanged water, and performing wet milling thereon. A particulate filter of wall-flow structure made of silicon carbide and having a diameter of 143 mm, length of 152 mm, 300 cpi and volume of 2.5 L was prepared, deposited on in the above-mentioned slurry, then extracted therefrom and the excess slurry was removed with air blowing. After drying this at 200°C for 2 hours, calcination was performed at 700°C for 2 hours.

Next, a Pt ·Pd/Al₂O₃ powder was obtained by preparing a mixture in which an aqueous solution in which a soluble Pt salt had been dissolved at a predetermined concentration and a palladium nitrate aqueous solution had been mixed, impregnated to active-alumina, and then drying at 200°C for 2 hours and calcining at 500°C for 2 hours. A slurry was obtained by mixing the Pt·Pd/Al₂O₃ powder thus obtained, SiO₂ sol and a proper amount of ion-exchanged water, and then performing wet milling thereon. The above-mentioned particulate filter on which the Ag-Pd/ceria-zirconia had been loaded was deposited on in this Pt·Pd/Al₂O₃ slurry, then extracted therefrom and excess slurry was removed with air blowing. The second purifying body equipped with the PM oxidation catalyst was obtained by drying this at 200°C for 2 hours, then calcining at 700°C for 2 hours.

An exhaust gas purifying device such as that shown in FIG. 3 was manufactured using the first purifying body (DOC), the third purifying body (NOx purifying catalyst), and the second purifying body (PM oxidation catalyst) manufactured as described above. More specifically, an exhaust gas purifying device was manufactured by disposing the first purifying body (DOC) upstream, the third purifying body (NOx purifying catalyst) midstream, and the second purifying body (PM oxidation catalyst) downstream in the exhaust gas path.

### Example 5

Each purifying body was manufactured similarly to Example 4 except for using a NOx purifying catalyst containing alkali metal and alkali earth metal in place of the NOx purifying catalyst of Example 4 using a cerium oxide-based material, zeolite, and the like. In addition, an exhaust gas purifying device was manufactured similarly to Example 4.

### Manufacture of Third Purifying Body (NOx Purifying Catalyst)

Active-alumina powder, titania powder, zirconia powder, and SiO₂ sol were mixed with a proper amount of ion-exchanged water, and wet milling was performed thereon to prepare a slurry. A monolith support of straight-flow structure having a diameter of 143 mm, length of 121 mm, 400 cpi and volume of 2.0 L was prepared, deposited on in the above-mentioned slurry, then extracted therefrom and the excess slurry was removed with air blowing. After drying this at 200°C for 2 hours, calcination was performed at 500°C for 2 hours to form a coating layer on the monolith support.

Next, an aqueous solution in which a soluble Pt salt and a soluble Rh salt had been dissolved was prepared, the above-mentioned monolith support having the coating layer was sedimented for 1 hour in this aqueous solution, and after extracting therefrom, was dried at 200°C for 2 hours, and then calcination was performed at 500°C for 2 hours. Subsequently, several aqueous solutions in which barium acetate and potassium acetate had been dissolved were respectively prepared, a monolith having a coating layer in which Pt and Rh had been loaded was sedimented for 1 hour in this aqueous solution and then extracted, followed by drying at 200°C for 2 hours, and then performing calcination at 500°C for 2 hours to obtain the third purifying body equipped with the NOx purifying catalyst.

### Comparative Example 4

Each purifying body was manufactured similarly to Example 4, except for using Pt/Al₂O₃ catalyst in place of the PM oxidation catalyst of Example 4. In addition, an exhaust gas purifying device was manufactured similarly to Example 4. Manufacture of Second Purifying Body (PM Oxidation Catalyst)

An aqueous solution was prepared in which a soluble Pt salt had been dissolved at a predetermined concentration, and then impregnated into activated alumina. Next, a Pt/Al₂O₃ powder was obtained by drying at 200°C for 2 hours, and then calcining at 500°C for 2 hours. A slurry was prepared by mixing the Pt/Al₂O₃ powder thus obtained, β zeolite, SiO₂ sol and proper amount of ion-exchanged water, and performing wet milling thereon. A particulate filter of wall-flow structure made of silicon carbide and having a diameter of 143 mm, length of 152 mm, 300 cpi and volume of 2.5 L was prepared, deposited on in the above-mentioned slurry, then extracted therefrom and the excess slurry was removed with air blowing. After drying this at 200°C for 2 hours, calcination was performed at 500°C for 2 hours to obtain the second purifying body' on which Pt/Al₂O₃ had been loaded.

### Comparative Example 5

Using the same catalysts as Example 4, an exhaust gas purifying device was manufactured in which only the arrangement of the catalysts of Example 4 was changed. More specifically, the first purifying body (DOC) was disposed upstream, the second purifying body (PM oxidation catalyst) was disposed midstream, and the third purifying body (NOx purifying catalyst) was disposed downstream.

### Comparative Example 6

An exhaust gas purifying device was manufactured in which the first purifying body (DOC) of Example 4 was disposed upstream and the second purifying body (PM oxidation catalyst) of Comparative Example 4 was disposed downstream.

### Evaluation

Evaluation was performed by installing a 2.2 liter displacement diesel engine on an engine bench, and respectively mounting the exhaust gas purifying devices manufactured in the Examples and Comparative Examples to the exhaust system thereof. By considering the time and vehicle speed set according to the test mode for EU passenger vehicles, an EU simulation mode setting the revolution speed and torque was established, and pre-treatment of the exhaust gas purifying device was performed by running the EU simulation mode for 900 cycles (equivalent to 10,000 km traveled), followed by measuring the NOx purification rate during the EU simulation mode running.

In addition, in a case of using a NOx purifying catalyst having NOx adsorption capacity, control was performed during the EU simulation mode running to set the air-fuel ratio of the exhaust gas to rich after the NOx adsorption amount of the NOx purifying catalyst had been saturated, with the object of causing the NOx adsorbed to the NOx purifying catalyst to undergo desorption and reduction treatment. Furthermore, in order to combustively remove PM accumulated in the filter during the pre-treatment of the exhaust gas purifying device, a regeneration process was carried out until the PM amount in the filter became substantially negligible by raising the exhaust gas temperature before the filter up to 600°C at a predetermined frequency. The heat-up control for filter regeneration was executed one time for 50 cycles (when 8 to 10 g of PM accumulated in the DPF). The evaluation results for Examples 4 and 5 and Comparative Examples 4 to 6 are shown in Table 4.

**Table 4**

| | EU simulation mode NOx purification rate | Filter regeneration process time (Average per process one time) |
|---|---|---|
| Example 4 | 70 % | 2.2 minutes |
| Example 5 | 68 % | 2.1 minutes |
| Comparative Example 4 | 59 % | 8.2 minutes |
| Comparative Example 5 | 55 % | 2.2 minutes |
| Comparative Example 6 | 8 % | 8.0 minutes |

As is evident from Table 4, Examples 4 and 5 have improved NOx purification rates compared to Comparative Example 4, and furthermore, the regeneration process time of the filter was shortened to approximately one-fourth. This shows that thermal degradation of the NOx purification catalyst disposed on an upstream side of the filter is suppressed and a high NOx purification rate is obtained as a result of the regeneration time of the filter being shortened due to the PM combustion performance of the PM oxidation catalysts loaded on the filter being high in Examples 4 and 5.

In addition, the time required in regeneration of the filter of Comparative Example 5 was substantially the same as Examples 4 and 5; however, this was a result of the NOx purification rate being 15% lower than Example 4. This shows that, as a result of the NOx purifying catalyst being disposed on a downstream side of the filter, the exhaust gas temperature declined due to the filter having large heat capacity, and thus the conversion from NO to NO₂ by way of the DOC was insufficient and NO₂ adsorption by the NOx purifying catalyst did not easily occur, a result of which the NOx purification rate declined.

With Comparative Example 6 in which a NOx purifying catalyst was not used, the NOx purifying rate under the EU simulation mode decreased by 10% or less. In addition, since the PM combustion performance of the noble metal catalyst loaded on the filter decreased, the time required in the regeneration process also lengthened compared to Example 4.

From the above results, it was found that thermal degradation of the NOx purifying catalyst was suppressed, NOx could be efficiently reduced and purified, and PM could also be efficiently oxidized and purified by disposing the DOC upstream, disposing the NOx purifying catalyst midstream, and disposing the PM oxidation catalyst made by loading Ag onto a composite oxide having oxygen release capacity downstream.

## Claims

1. An exhaust gas purifying device (10, 20) for purifying exhaust gas discharged from an internal combustion engine, the device comprising:
a first purifying body (13, 23) that is disposed on an upstream side of an exhaust flow path (11), and includes an oxidation catalyst for purifying HC and CO in the exhaust gas;
a third purifying body (25) that is disposed in the exhaust gas flow path (11) on a side further downstream than the first purifying body (13, 23), and includes a NOx purifying catalyst for purifying NOx in exhaust gas in which an air-fuel ratio has been controlled to lean or rich; and
a second purifying body (14, 24), disposed in the exhaust gas flow path (11) on a side further downstream than the third purifying body (25), for purifying particulate matter in the exhaust gas,
wherein the second purifying body (14, 24) includes a filter capable of collecting the particulate matter, and a particulate matter oxidation catalyst supported on the filter and made by co-loading Ag and Pd on a composite oxide having oxygen release capacity, and wherein the second purifying body (14, 24) further includes a NO₂ production catalyst that is supported on the filter and converts NO contained in the exhaust gas into NO₂.

2. The exhaust gas purifying device according to claim 1, wherein the NOx purifying catalyst is a NOx trap catalyst containing at least one NOx adsorption element selected from the group consisting of alkali metal elements and alkali earth metal elements, a noble metal element, and a cerium oxide-based material.

3. The exhaust gas purifying device according to claim 1,
wherein the NOx purifying catalyst includes a first catalyst layer and a second catalyst layer,
wherein the first catalyst layer contains β zeolite having iron and/or cerium,
wherein the second purifying layer contains a noble metal and a cerium oxide-based material, and
wherein the second catalyst layer and the first catalyst layer are sequentially laminated onto a carrier, and the first catalyst layer is configured so as to be the topmost layer.

4. The exhaust gas purifying device according to claim 1, 2 or 3, wherein the filter is a filter of wall-flow type composed of a porous, fire-resistant ceramic.

5. The exhaust gas purifying device according to any one of claims 1-4, wherein the composite oxide is a composite oxide having at least one crystalline structure selected from the group consisting of perovskite-type, spinel-type, rutile-type, delafossite-type, magnetoplumbite-type, ilmenite-type, and fluorite-type.

6. The exhaust gas purifying device according to any one of claims 1-5, wherein the composite oxide includes at least one element selected from the group consisting of alkali metal elements, alkali earth metal elements, transition metal elements, periodic group 12 elements and periodic group 13 elements, and performs absorption and release of oxygen by changing the valence of constituent elements thereof.

7. The exhaust gas purifying device according to any one of claims 1-6, wherein the NO₂ production catalyst is made by loading at least one element selected from the group consisting of Pt, Pd and Rh onto a high-specific surface area carrier.

8. The exhaust gas purifying device according to claim 7, wherein the high-specific surface area carrier is at least one carrier selected from the group consisting of alumina, silica, titania, ceria and zirconia.

9. The exhaust gas purifying-device according to any one of claims 1-8, wherein the first purifying body contains at least one element selected from the group consisting of Pt, Pd and Rh.

## Patentansprüche

1. Abgasreinigungsvorrichtung (10, 20) zum Reinigen von von einem Verbrennungsmotor abgegebenem Abgas, wobei die Vorrichtung aufweist:
einen ersten Reinigerkörper (13, 23), der an einer stromaufwärtigen Seite eines Abgasströmungswegs (11) angeordnet ist und einen Oxidationskatalysator zum Reinigen von KW und CO im Abgas enthält;
einen dritten Reinigerkörper (25), der in dem Abgasströmungsweg (11) an einer weiter stromabwärtigen Seite als der erste Reinigerkörper (13, 23) angeordnet ist und einen NOx-Reinigungskatalysator zum Reinigen von NOx im Abgas enthält, in dem ein Luftkraftstoffverhältnis auf mager oder fett gesteuert/geregelt worden ist; und
einen zweiten Reinigerkörper (14, 24), der in dem Abgasströmungsweg (11) an einer weiter stromabwärtigen Seite als der dritte Reinigerkörper (25) angeordnet ist, um Partikelmaterial im Abgas zu reinigen;
wobei der zweite Reinigerkörper (14, 24) einen Filter enthält, der zum Sammeln des Partikelmaterials in der Lage ist, sowie einen Partikalmaterialoxidationskatalysator, der auf dem Filter getragen ist und hergestellt ist, in dem Ag und Pd gemeinsam auf ein Kompositoxid geladen sind, das eine Sauerstofffreisetzungsfähigkeit hat, und wobei der zweite Reinigerkörper (14, 24) ferner einen NO₂-Produktionskatalysator enthält, der auf dem Filter getragen ist und im Abgas enthaltenes NO in NO₂ umwandelt.

2. Die Abgasreinigungsvorrichtung nach Anspruch 1, wobei der NOx-Reinigungskatalysator ein NOx-Fallenkatalysator ist, der zumindest ein NOx-Absorptionselement enthält, das ausgewählt ist aus der Gruppe bestehend aus Alkalimetallelementen und Erdalkalimetallelementen, einem Edelmetallelement und einem auf Ceroxid basierendem Material.

3. Die Abgasreinigungsvorrichtung nach Anspruch 1,
wobei der NOx-Reinigungskatalysator eine erste Katalysatorschicht und eine zweite Katalysatorschicht enthält,
wobei die erste Katalysatorschicht β Zeolit mit Eisen und/oder Cer enthält,
wobei die zweite Reinigerschicht ein Edelmetall und ein auf Ceroxid basierendes Material enthält, und
wobei die zweite Katalysatorschicht und die erste Katalysatorschicht sequenziell auf einen Träger laminiert sind, und die erste Katalysatorschicht als die oberste Schicht konfiguriert ist.

4. Die Abgasreinigungsvorrichtung nach Anspruch 1, 2 oder 3, wobei der Filter ein Filter vom Wandströmungstyp ist, der aus einer porösen feuerbeständigen Keramik aufgebaut ist.

5. Die Abgasreinigungvorrichtung nach einem der Ansprüche 1 bis 4, wobei das Kompositoxid ein Kompositoxid mit zumindest einer kristallinen Struktur ist, ausgewählt aus der Gruppe bestehend aus Perovskit-Typ, Spinell-Typ, Rutil-Typ, Delafossit-Typ, Magnetoplumbit-Typ, Ilmenit-Typ und Fluorid-Typ.

6. Die Abgasreinigungsvorrichtung nach einem der Ansprüche 1 bis 5, wobei das Kompositoxid zumindest ein Element enthält, ausgewählt aus der Gruppe bestehend aus Alkalimetallelementen, Erdalkalimetallelementen, Übergangsmetallelementen, Periodengruppe-12-Elementen und Periodengruppe-13-Elementen, und eine Absorption und Freisetzung des Sauerstoffs durch Valenzänderung von dessen Bauelementen durchführt.

7. Die Abgasreinigungsvorrichtung nach einem der Ansprüche 1 bis 6, wobei der NO₂-Produktionskatalysator hergestellt ist, indem zumindest ein Element, ausgewählt aus der Gruppe bestehend aus Pt, Pd und Rh, auf einen Träger mit hochspezifischer Oberfläche geladen wird.

8. Die Abgasreinigungsvorrichtung nach Anspruch 7, wobei der Träger mit hochspezifischer Oberfläche zumindest ein Träger ist, ausgewählt aus der Gruppe bestehend aus Aluminiumoxid, Siliziumoxid, Titanoxid, Ceroxid und Zirkoniumoxid.

9. Die Abgasreinigungsvorrichtung nach einem der Ansprüche 1 bis 8, wobei der erste Reinigerkörper zumindest ein Element enthält, ausgewählt aus der Gruppe bestehend aus Pt, Pd und Rh.

## Revendications

1. Dispositif de purification de gaz d'échappement (10, 20) pour purifier un gaz d'échappement évacué d'un moteur à combustion interne, le dispositif comprenant :
un premier corps de purification (13, 23) qui est disposé sur un côté amont d'un chemin d'écoulement d'échappement (11), et comprend un catalyseur d'oxydation pour purifier HC et CO dans le gaz d'échappement ;
un troisième corps de purification (25) qui est disposé dans le chemin d'écoulement de gaz d'échappement (11) sur un côté plus en aval que le premier corps de purification (13, 23), et comprend un catalyseur de purification de NOx pour purifier NOx dans un gaz d'échappement dans lequel un rapport air-carburant a été ajusté pour être pauvre ou riche ; et
un deuxième corps de purification (14, 24), disposé dans le chemin d'écoulement de gaz d'échappement (11) sur un côté plus en aval que le troisième corps de purification (25), pour purifier des matières particulaires dans le gaz d'échappement,
dans lequel le deuxième corps de purification (14, 24) comprend un filtre capable de recueillir les matières particulaires, et un catalyseur d'oxydation de matières particulaires supporté sur le filtre et réalisé en cochargeant Ag et Pd sur un oxyde composite ayant une capacité de libération d'oxygène, et dans lequel le deuxième corps de purification (14, 24) comprend en outre un catalyseur de production de NO₂ qui est supporté sur le filtre et convertit le NO contenu dans le gaz d'échappement en NO₂.

2. Dispositif de purification de gaz d'échappement selon la revendication 1, dans lequel le catalyseur de purification de NOx est un catalyseur piégeur de NOx contenant au moins un élément d'adsorption de NOx choisi dans le groupe constitué par des éléments de métal alcalin et des éléments de métal alcalino-terreux, un élément de métal noble et un matériau à base d'oxyde de cérium.

3. Dispositif de purification de gaz d'échappement selon la revendication 1,
dans lequel le catalyseur de purification de NOx comprend une première couche de catalyseur et une seconde couche de catalyseur,
dans lequel la première couche de catalyseur contient unezéolite β ayant du fer et/ou du cérium,
dans lequel la seconde couche de purification contient un métal noble et un matériau à base d'oxyde de cérium, et
dans lequel la seconde couche de catalyseur et la première couche de catalyseur sont stratifiées successivement sur un support, et la première couche de catalyseur est configurée de façon à être la couche la plus haute.

4. Dispositif de purification de gaz d'échappement selon la revendication 1, 2 ou 3, dans lequel le filtre est un filtre de type à paroi filtrante composé d'une céramique poreuse, résistant au feu.

5. Dispositif de purification de gaz d'échappement selon l'une quelconque des revendications 1 à 4, dans lequel l'oxyde composite est un oxyde composite ayant au moins une structure cristalline choisie dans le groupe constitué par le type pérovskite, le type spinelle, le type rutile, le type delafossite, le type magnétoplombite, le type ilménite et le type fluorite.

6. Dispositif de purification de gaz d'échappement selon l'une quelconque des revendications 1 à 5, dans lequel l'oxyde composite comprend au moins un élément choisi dans le groupe constitué par les éléments de métal alcalin, les éléments de métal alcalino-terreux, les éléments de métal de transition, les éléments du groupe périodique 12 et les éléments du groupe périodique 13, et réalise une adsorption et une libération de l'oxygène en modifiant la valence de leurs éléments constitutifs.

7. Dispositif de purification de gaz d'échappement selon l'une quelconque des revendications 1 à 6, dans lequel le catalyseur de production de NO₂ est réalisé en chargeant au moins un élément choisi dans le groupe constitué par Pt, Pd et Rh sur un support à superficie spécifique élevée.

8. Dispositif de purification de gaz d'échappement selon la revendication 7, dans lequel le support à superficie spécifique élevée est au moins un support choisi dans le groupe constitué par l'alumine, la silice, le dioxyde de titane, l'oxyde de cérium et la zircone.

9. Dispositif de purification de gaz d'échappement selon l'une quelconque des revendications 1 à 8, dans lequel le premier corps de purification contient au moins un élément choisi dans le groupe constitué par Pt, Pd et Rh.
